# DEMANDE DE BREVET EUROPEEN

(11) **EP 1 860 400 A1**
(43) Date de publication de la demande: **28.11.2007**
(21) Numéro de dépôt: 06290831.4
(22) Date de dépôt: 23.05.2006
(51) Int. Cl.: G01C 15/00

(54) **Système de support contrôlable permettant de positionner un niveau de type à faisceau laser**

(71) Demandeur: Agatec, 78600 Le Mesnil Le Roi (FR)
(72) Inventeur: Gamal, Albert, 78600 Le Mesnil Le Roi (FR); Franclet, Roland, 95490 Vaureal (FR)
(74) Mandataire: Debay, Yves

(57) **Abrégé**

L'invention concerne un système de support pour positionner un appareil (3) de niveau à faisceau laser et comprend :
- un premier support (1) incluant une pièce de référentiel (10) positionnable sur une surface plane et des moyens d'accrochage (11) disposés selon une direction longitudinale (A1) pour coopérer avec un second support (2) mobile par rapport au premier support (1)
- des moyens de maintien (22) sur le second support (2) pour supporter un appareil (3) de détermination de niveau du type à faisceau laser et un élément de motorisation (25) pour entraîner selon deux sens de rotation un axe d'entraînement d'au moins un organe déplaçable en translation le long du premier support (1), et
- un ensemble de commande à distance dudit élément de motorisation (25).

Le système positionnable en hauteur sur des murs permet de positionner automatiquement le faisceau laser de façon continue et progressive.

## Description

La présente invention concerne le domaine des appareils de détermination de niveau avec un laser. L'invention concerne plus particulièrement un système de support contrôlable permettant de positionner un niveau de type à faisceau laser.

En général, les appareils de détermination de niveau sont utilisés en construction, par exemple lors de la mise en place d'une surface horizontale fixée sur des piliers ou des parois latérales, pour un nivellement de terrain ou encore pour des mesures par un géomètre.

Actuellement, le positionnement d'un appareil à faisceau laser nécessite la plupart du temps des réglages précis réalisés par l'utilisateur, ce qui nécessite de manipuler directement l'appareil à faisceau laser. Plus spécifiquement, il existe certes des lasers à pentes mais il n'est pas proposé de solutions pour facilement régler le niveau d'un appareil laser de façon horizontale, verticale ou inclinée lorsque ce dernier est préalablement réglé.

La présente invention a donc pour objet de pallier un ou plusieurs des inconvénients de l'art antérieur en définissant un système adapté pour positionner un tel appareil à faisceau laser en position suspendue tout en permettant d'ajuster facilement la hauteur du niveau.

Un objectif supplémentaire de l'invention est de proposer un système permettant de modifier à la fois la position d'un appareil laser placé sur une surface et la position du faisceau laser de manière continue et progressive.

Ces objectifs sont atteints grâce à un système de support contrôlable pour le positionnement d'un appareil de détermination de niveau du type ayant une tête de laser pour émettre au moins un faisceau laser, **caractérisé en ce qu**'il comporte :
- un premier module support incluant une pièce de référentiel positionnable sur une surface sensiblement plane,
- un second module support mobile par rapport au premier module support comprenant des moyens de maintien pour supporter un appareil de détermination de niveau du type à faisceau laser,
- des moyens d'accrochage disposés sur le premier module support selon une direction parallèle à un axe dit longitudinal pour coopérer avec le second module support,
- dans le second module support, au moins un élément pour entraîner selon deux sens de rotation un axe d'entraînement prévu pour entraîner au moins un organe déplaçable en translation dans les deux sens suivant ledit axe longitudinal, les moyens d'accrochage du premier module support comprenant au moins une surface de contact longitudinale de longueur déterminée adaptée pour recevoir et positionner ledit organe déplaçable en translation du second module support, et
- un ensemble de commande à distance dudit élément de motorisation.

Selon une autre particularité, le premier module support comprend des moyens de fixation pour fixer et positionner la pièce de référentiel sur une surface sensiblement plane.

Ainsi, le système selon l'invention peut être placé en hauteur, par exemple pour positionner un niveau lors de la réalisation de faux plafonds et être contrôlée à distance.

Selon une autre particularité, le second module support comporte :
- un axe d'articulation sur lequel est monté en rotation un appareil laser de détermination de niveau ; et
- des moyens de blocage pour bloquer l'appareil selon une position angulaire définie par l'angle formé entre l'axe central de l'appareil traversant la tête du laser et l'axe longitudinal.

Ainsi, l'invention permet de réaliser des niveaux inclinés, par exemple lors de l'élaboration d'escaliers, pentes inclinée et toits.

Selon une autre particularité, ledit angle est compris entre 90 et 180°.

Selon une autre particularité, le premier module support comprend au moins un bras déployable solidaire de la pièce de référentiel pour améliorer la stabilité du premier module support par rapport à la surface sur laquelle il est positionné.

Selon une autre particularité, le second module support comporte un côté arrière apte à collaborer avec le premier module support et un côté avant opposé au côté arrière incluant les moyens de maintien pour supporter l'appareil de détermination de niveau du type à faisceau laser, un logement allongé étant prévu sur ledit côté arrière pour coopérer avec au moins une rainure longitudinale formant glissière du premier module support.

Selon une autre particularité, l'élément pour entraîner de l'axe d'entraînement est constitué d'un élément de motorisation relié à des moyens d'alimentation électrique.

Selon une autre particularité, le système selon l'invention comprend un ensemble de commande à distance dudit élément de motorisation.

Ainsi, l'utilisateur peut contrôler le positionnement de la hauteur du niveau sans risquer de modifier des réglages de l'appareil à faisceau laser.

Selon une autre particularité, les moyens d'alimentation électrique auxquels est relié l'élément de motorisation sont disposés dans lesdits moyens de maintien et comprennent une interface de contact avec des organes d'alimentation électrique de l'appareil de détermination de niveau.

Selon une autre particularité, lesdits moyens d'alimentation électrique sont prévus pour rendre l'élément de motorisation du second module support contrôlable à distance, par l'intermédiaire de moyens de commande électrique de l'appareil de détermination de niveau contrôlés par une télécommande.

Selon une autre particularité, lesdits moyens de maintien comprennent des bras latéraux portant chacun un axe de pivotement sur lequel est monté l'appareil de détermination de niveau du type à faisceau laser, ledit axe de pivotement étant parallèle à l'axe d'entraînement entraîné par l'élément de motorisation du second module support.

Selon une autre particularité, le second module support comporte sur son côté avant une surface formant butée prévue pour recevoir l'appareil de détermination de niveau lorsqu'un axe imaginaire central de l'appareil traversant la tête du laser est parallèle à l'axe longitudinal, lesdits axes de pivotement étant agencés pour permettre un pivotement de l'appareil au moins entre la position d'appui sur la butée et une position orthogonale pour laquelle l'axe central de l'appareil est orthogonal audit axe longitudinal.

Selon une autre particularité, lesdits moyens de maintien comportent des moyens de réglage manuel de l'inclinaison de l'appareil de détermination de niveau.

Selon une autre particularité, le second module support comporte un bouton manuel de manoeuvre aligné par rapport à l'élément de motorisation.

Selon une autre particularité, le second module support constitue une partie indissociable de l'appareil de détermination de niveau.

Selon une autre particularité, lesdits moyens de maintien du second module support comprennent des bras latéraux symétriques de fixation de l'appareil de détermination de niveau du type dotés de moyens de fixation permettant de séparer manuellement l'appareil dudit second module support.

Selon une autre particularité, ladite surface de contact longitudinale de longueur déterminée est du type à crans ou crénelée pour recevoir un organe de déplacement de type roue dentée.

Selon une autre particularité, ladite surface de contact longitudinale est remplacée par des surfaces d'au moins deux poulies ou enrouleurs/dérouleurs pour permettre la translation d'un organe de déplacement de type câble.

L'invention, avec ses caractéristiques et avantages, ressortira plus clairement à la lecture de la description faite en référence aux dessins annexés donnés à titre d'exemples non limitatifs dans lesquels :
- la figure 1 représente une vue en perspective d'un mode de réalisation de l'ensemble système de support avec l'appareil de détermination de niveau à faisceau laser ;
- la figure 2 représente, pour une position de fixation à un mur vertical, une vue de dessous de l'ensemble système de support avec l'appareil de détermination de niveau à faisceau laser ;
- la figure 3 représente un exemple de support mural utilisé dans l'invention ;
- la figure 4 représente une vue selon la coupe BB de la figure 2 de l'ensemble système de support avec l'appareil de détermination de niveau à faisceau laser ainsi que les moyens d'entraînement utilisés dans un mode de réalisation de l'invention ;
- les figures 5A et 5B représentent différentes inclinaisons pour la tête de laser obtenues grâce au système de l'invention.

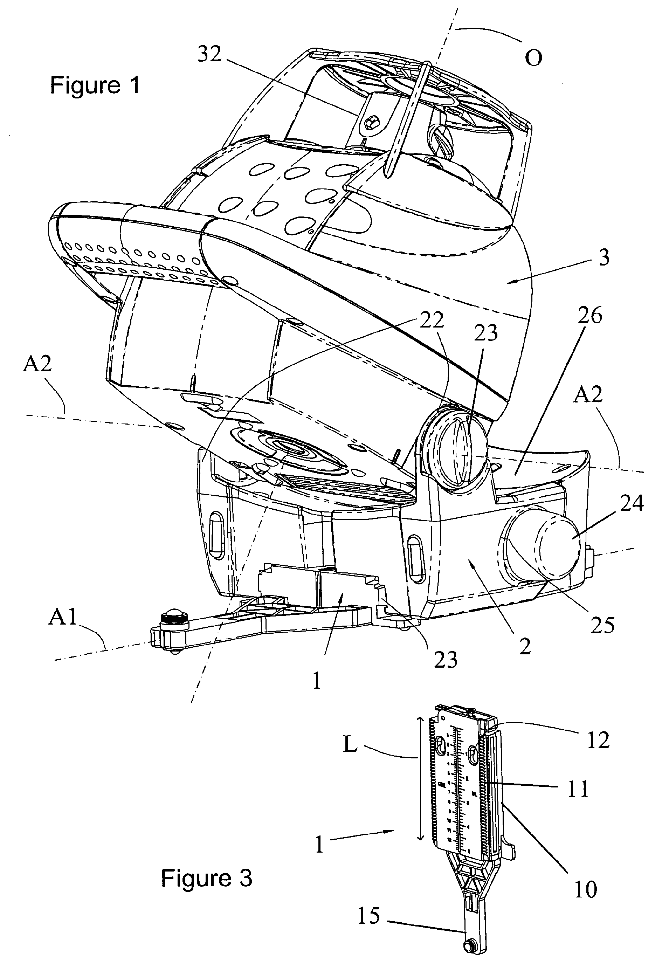

Le système de support de l'invention contrôlable permet de positionner un niveau de type à faisceau laser pour donner la verticalité. Dans ce cas, l'appareil (3) de détermination de niveau du type ayant une tête (32) de laser pour émettre au moins un faisceau laser peut être non seulement posé au sol (pour par exemple aligner des cloisons), mais il peut également être disposé contre une paroi verticale. Le type d'appareil (3) à niveau laser peut être compris au sens large comme correspondant à tout appareil de détermination de niveau par laser, par exemple comportant d'une part un boîtier fixe qui contient un générateur de faisceau laser et un module motorisé permettant de faire tourner le faisceau, ou de déterminer une ligne ou une croix et d'autre part une tête mobile (32) solidaire de l'extrémité sortante d'un arbre entraîné en rotation qui comprend un ensemble optique réfléchissant le faisceau laser issu du corps renfermant la source laser. Comme représenté à la figure 1, le boîtier peut comporter une coupole qui protège la tête mobile (32) de chocs éventuels. Le système selon l'invention est particulièrement adapté pour des rayons d'action du laser variant entre 0 et 150 m. Le boîtier peut être métallique ou moulé en matière plastique, équipé de moyens de préhension (31) tels qu'une ou plusieurs poignées, des cavités pour le passage des doigts, etc. Le boîtier peut inclure un logement destiné à une batterie fermé à l'aide d'un couvercle amovible. Les batteries employées, rechargeables, sont de 2,4 ou 4,8 V. Ce type d'appareil compact et relativement léger (généralement entre 2 et 4 kg), de dimensions inférieures au mètre, peut être monté facilement sur un support trépied ou sur un support mural.

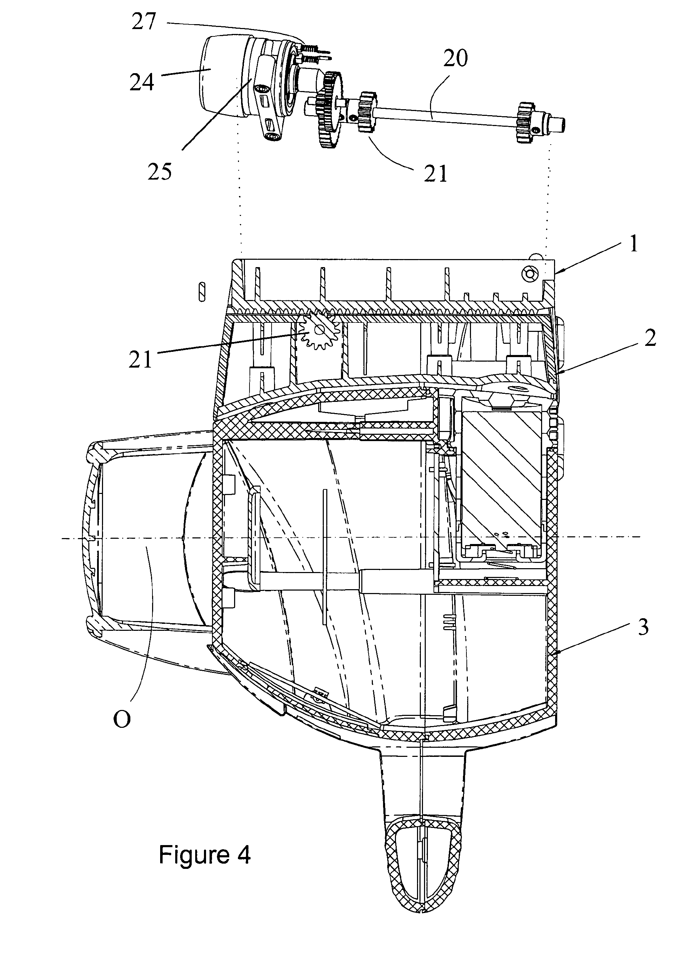

Le système de support selon l'invention peut permettre d'incliner l'appareil (3) pour donner un plan incliné, l'inclinaison souhaitée étant préréglée par un positionnement de l'appareil (3) à niveau laser par rapport à un ensemble support. Il est également permis de fournir une hauteur déterminée ou un plan référentiel pour par exemple poser un faux-plafond. Pour cela, comme illustré aux figures 1 et 3, le système de support est modulaire, comportant d'une part un premier module support (1) incluant une pièce de référentiel (10) positionnable sur une surface sensiblement plane, et d'autre part un second module support (2) mobile par rapport au premier module support (1) auquel est associé l'appareil (3) de détermination de niveau. Ce second module support (2) comprend des moyens de maintien (22) pour supporter l'appareil (3), comme illustré à la figure 1.

Des moyens d'accrochage (11) sont disposés sur le premier module support (1) selon une direction parallèle à un axe dit longitudinal (A1) pour coopérer avec le second module support (2). Des moyens de fixation (12) du type permettant le vissage le perçage d'inserts dans la paroi sont en outre prévus pour fixer et positionner la pièce de référentiel (10) sur la surface sensiblement plane de la paroi. Le premier module support (1) peut aussi être muni d'au moins un bras (15) déployable solidaire de la pièce de référentiel (10) pour améliorer sa stabilité par rapport à la surface sur laquelle il est positionné.

Dans le second module support (2), il est prévu au moins un élément pour entraîner selon deux sens de rotation un axe d'entraînement (20) servant à entraîner un ou plusieurs organes (21, figure 4) déplaçables en translation suivant ledit axe longitudinal (A1). Un élément de motorisation (25) relié à des moyens d'alimentation électrique peut initier cet entraînement, la vitesse de rotation de l'arbre moteur de l'élément de motorisation pouvant en outre varier. Dans le mode de réalisation des figures 3 et 4, les moyens d'accrochage (11) du premier module support (1) comprennent au moins une surface de contact longitudinale de longueur déterminée (L) adaptée pour recevoir et positionner ledit organe (21) déplaçable en translation du second module support (2). La surface de contact longitudinale de longueur déterminée (L) est par exemple du type à crans ou crénelée pour recevoir un organe de déplacement de type roue dentée. L'axe d'entraînement (20) peut porter ou servir à entraîner un tel organe (21) de type roue dentée, comme illustré à la figure 4. Naturellement, tout type de moyen anti-dérapant peut être utilisé pour l'accrochage entre les deux modules support (1, 2). Dans une variante, ladite surface de contact longitudinale peut être remplacée par les surfaces d'au moins deux poulies ou enrouleurs/dérouleurs pour permettre la translation d'un organe de déplacement de type câble ou moyen de levage analogue.

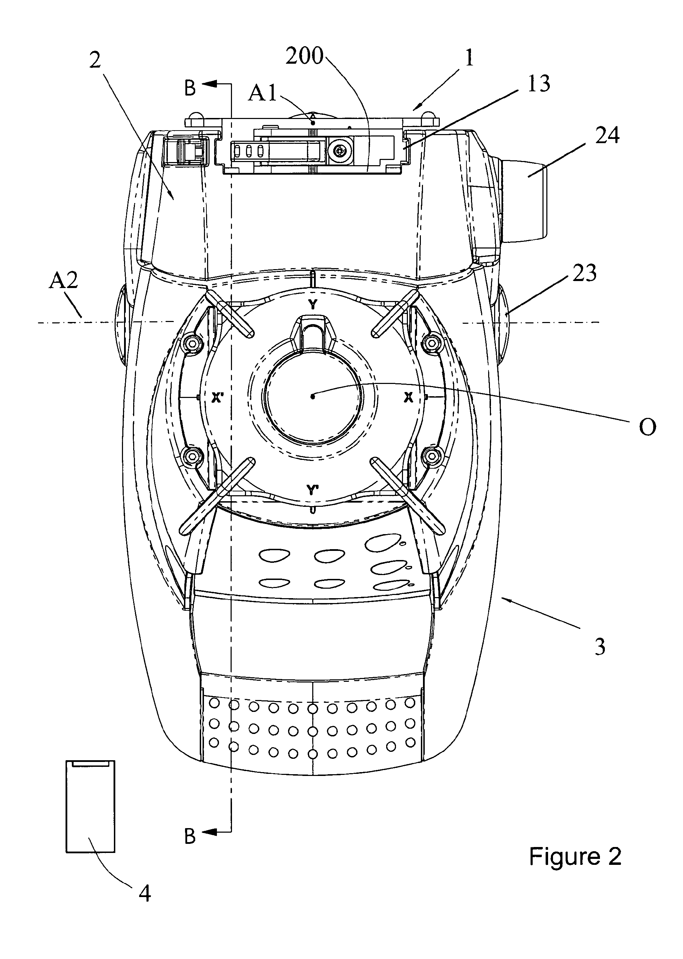

Dans l'exemple des figures 1, 2 et 4, le second module support (2) comporte un côté arrière apte à collaborer avec le premier module support (1) et un côté avant opposé au côté arrière incluant les moyens de maintien (22) pour supporter l'appareil (3) de détermination de niveau à faisceau laser. Pour permettre aux modules (1, 2) de coopérer de façon solidaire, un logement allongé (200, figure 2) est prévu sur ledit côté arrière pour recevoir une portion en saillie longitudinale du module (1) formant support mural. Ce logement (200) peut coopérer avec au moins une rainure longitudinale (23) formant glissière du premier module support (1). Comme représenté aux figures 1 et 2, le premier module support (1) fixe comporte par exemple des rainures latérales rentrant dans des gorges internes formées sur les flancs du logement (200). Une ou plusieurs butées peuvent être prévues sur le module support (1) fixe pour stopper/délimiter une fin de course du module support (2) mobile.

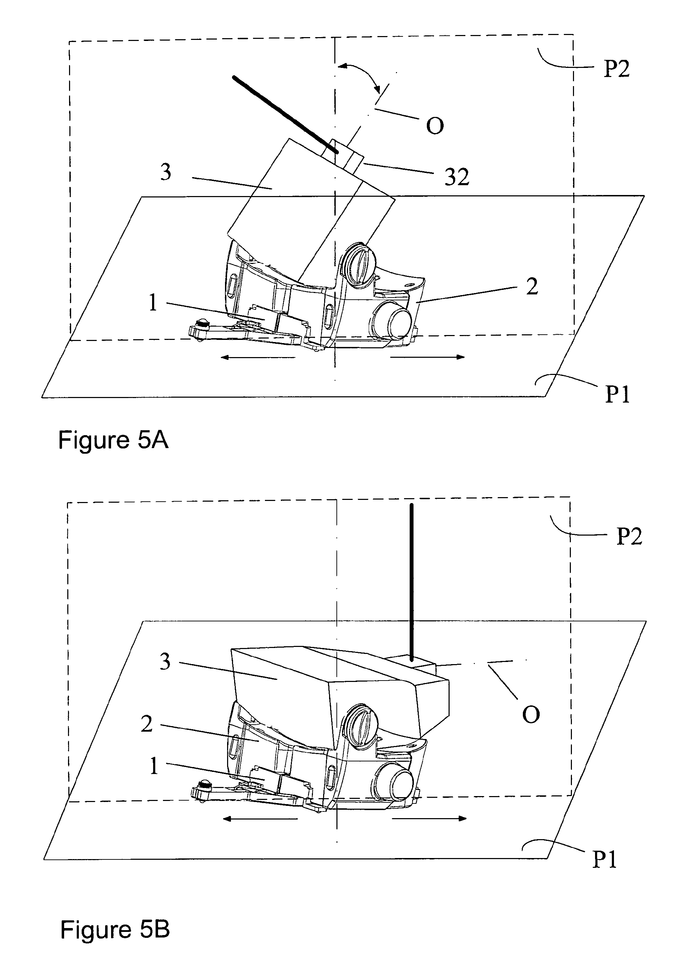

Pour permettre d'incliner l'appareil selon des angles variés, le second module support (2) comporte avantageusement un axe d'articulation sur lequel est monté en rotation un appareil (3) laser de détermination de niveau, ainsi que des moyens pour bloquer l'appareil (3) selon une position angulaire définie par l'angle (O,A1) formé entre l'axe central (O) de l'appareil (3) traversant la tête (32) du laser et l'axe longitudinal (A1). Cet angle peut être compris entre 90 et 180°. Les moyens de maintien (22) servant à supporter l'appareil (3) comprennent par exemple des bras latéraux portant chacun un axe (A2) de pivotement sur lequel est monté l'appareil (3) de détermination de niveau du type à faisceau laser. Cet axe de pivotement (A2) est parallèle à l'axe d'entraînement (20) entraîné par l'élément de motorisation (25) du second module support (2). En référence à la figure 1, le second module support (2) peut comporter sur son côté avant une surface formant butée (26) pour recevoir l'appareil (3) de détermination de niveau lorsque l'axe central (O) de l'appareil (3) traversant la tête (32) du laser est parallèle à l'axe longitudinal (A1). Dans un mode de réalisation de l'invention, les axe de pivotement (A2) sont agencés pour permettre un pivotement de l'appareil (3) au moins entre la position d'appui sur la butée (26) et une position orthogonale pour laquelle l'axe central (O) de l'appareil (3) est orthogonal audit axe (A1) longitudinal. Ainsi, des angles d'inclinaison différents peuvent être obtenus lorsque l'appareil (3) à faisceau laser est suspendu par l'intermédiaire du système de support selon l'invention contre une paroi verticale. De façon analogue, le système support peut permettre des modifications du niveau de l'appareil (3) lorsque ce dernier est mis au sol ou encore disposé sur un trépied. Des moyens (23) de réglage manuel de l'inclinaison de l'appareil (3) de détermination de niveau sont prévus sur les moyens de maintien (22) pour permettre, par préréglage avant ajustement vertical ou en latéralité, de réaliser des niveaux inclinés. En référence aux figures 5A et 5B, le faisceau laser peut être incliné à l'aide de ces moyens (23) de réglage dans le plan (P2) passant par l'axe longitudinal (A1) et orthogonal au plan (P1) incluant la pièce de référentiel du premier module support (1).

Pour assurer un réglage précis, réalisé de façon continue et progressive, alors que l'appareil (3) à niveau laser est monté sur le système de support selon l'invention, il est prévu un ensemble de commande à distance de l'élément de motorisation (25) permettant le déplacement du second module support (2) le long de l'axe longitudinal (A1). En général, selon la pose du premier module support sur la paroi, cet axe longitudinal (A1) est soit vertical pour un ajustement en hauteur, soit horizontal pour un ajustement en latéralité. Une commande à distance est permise par utilisation d'une télécommande (4, figure 2) infrarouge ou analogue (radio, Bluetooth®). Cette télécommande correspond par exemple à une télécommande classique pour appareil de niveau à faisceau laser, servant à gérer la vitesse de rotation de la tête (32), déplacer le point laser de gauche à droite et inversement, à passer d'un mode point à un mode rotation, à réaliser un balayage, etc. Toutefois, l'appareil (3) peut interpréter certaines commandes de façon différente lorsqu'un mode particulier est enclenché, en l'occurrence un mode de positionnement externe de l'appareil (3). Un tel mode peut être déclenché par un appui prolongé suffisant (supérieur ou égal à 2 voire 5 secondes par exemple) permettant l'activation de ce mode. Une fois ce type de temporisation effectuée, certaines des commandes permettent alors d'ajuster la position du second module support (2) le long dudit premier module support (1).

Des moyens d'alimentation électrique sont prévus pour rendre l'élément de motorisation (25) du second module support (2) contrôlable à distance Par exemple, des moyens de commande électrique de l'appareil (3) de détermination de niveau contrôlés activent, via des moyens d'alimentation électrique, cet élément de motorisation dans l'un ou l'autre des sens de rotation, la polarité étant inversée pour changer le sens de rotation de l'arbre d'entraînement (20), et donc le sens de déplacement suivant l'axe longitudinale (A1).

La transmission des commandes entre l'appareil (3) et le module support (2) mobile est permis grâce à aux moyens d'alimentation électrique prévus pour alimenter l'élément de motorisation (25). Ces moyens d'alimentation électrique (non représentés) sont par exemple disposés dans les moyens de maintien (22) du second module support (2) et comprennent une interface de contact avec des organes d'alimentation électrique de l'appareil (3) à niveau laser. De simples vis ou inserts conducteurs équivalents raccordés électriquement peuvent constituer les interfaces de contact. On comprend que le pivotement de l'appareil (3) autour des axes de pivotement (A2) peut aussi être réalisé par l'intermédiaire d'un contrôle par la télécommande (4). En variante l'ensemble support peut être indépendant et comporter par exemple des batteries intégrées dans le second module support (2).

En référence à la figure 1, le second module support (2) comporte un bouton manuel (24) de manoeuvre aligné par rapport à l'élément de motorisation (25). Un tel bouton (24) est par exemple agencé pour activer ou désactiver l'élément de motorisation (25). Comme illustré à la figure 4, ce bouton peut être associé à un dispositif (27) d'enclenchement permettant une désactivation automatique du bouton au-delà d'une durée déterminée de non-fonctionnement, de façon à éviter les risques d'oubli de désactivation du mode de positionnement externe de l'appareil (3).

Il doit être compris que le second module support (2) peut constituer une partie indissociable de l'appareil (3) de détermination de niveau ou en variante constituer un module indépendant séparable. Dans un mode de réalisation de l'invention, les moyens de maintien (22) du second module support (2) comprennent des bras latéraux symétriques de fixation de l'appareil (3) incluant des moyens de fixation permettant de séparer manuellement l'appareil (3) dudit second module support (2).

Un des avantages de l'invention réside dans l'apport de nouvelles manières de positionner un laser, ce qui facilite grandement la tâche de l'utilisateur, tout en permettant un contrôle automatique précis commandé à distance.

Il doit être évident pour les personnes versées dans l'art que la présente invention permet des modes de réalisation sous de nombreuses autres formes spécifiques sans l'éloigner du domaine d'application de l'invention comme revendiqué.

## Revendications

1. Système de support contrôlable pour le positionnement d'un appareil (3) de détermination de niveau du type ayant une tête (32) de laser pour émettre au moins un faisceau laser, comportant :
- un premier module support (1) incluant une pièce de référentiel (10) positionnable sur une surface sensiblement plane,
- un second module support (2) mobile par rapport au premier module support (1) comprenant des moyens de maintien (22) latéraux pour supporter un appareil (3) de détermination de niveau du type à faisceau laser,
- des moyens d'accrochage (11) disposés sur le premier module support (1) selon une direction parallèle à un axe dit longitudinal (A1) pour coopérer avec le second module support (2),
- dans le second module support (2), au moins un élément pour entraîner selon deux sens de rotation un axe d'entraînement (20) prévu pour entraîner au moins un organe (21) déplaçable en translation dans les deux sens suivant ledit axe longitudinal (A1), les moyens d'accrochage (11) du premier module support (1) comprenant au moins une surface de contact longitudinale de longueur déterminée (L) adaptée pour recevoir et positionner ledit organe (21) déplaçable en translation du second module support (2),
ledit système étant **caractérisé en ce que** l'élément pour entraîner l'axe d'entraînement (20) comporte un élément de motorisation (25) du type commandé par un ensemble de commande à distance et relié à des moyens d'alimentation électrique.

2. Système selon la revendication 1, dans lequel le premier module support (1) comprend des moyens de fixation (12) pour fixer et positionner la pièce de référentiel (10) sur une surface sensiblement plane.

3. Système selon la revendication 1 ou 2, dans lequel le second module support (2) comporte :
- un axe d'articulation sur lequel est monté en rotation un appareil (3) laser de détermination de niveau ; et
- des moyens de blocage pour bloquer l'appareil (3) selon une position angulaire définie par l'angle (O,A1) formé entre l'axe central (O) de l'appareil (3) traversant la tête (32) du laser et l'axe longitudinal (A1).

4. Système selon la revendication 3, dans lequel ledit angle (O,A1) est compris entre 90 et 180°.

5. Système selon une des revendications 1 à 4, dans lequel le premier module support (1) comprend au moins un bras (15) déployable solidaire de la pièce de référentiel (10) pour améliorer la stabilité du premier module support (1) par rapport à la surface sur laquelle il est positionné.

6. Système selon une des revendications 1 à 5, dans lequel le second module support (2) comporte un côté arrière apte à collaborer avec le premier module support (1) et un côté avant opposé au côté arrière incluant les moyens de maintien (22) pour supporter l'appareil (3) de détermination de niveau du type à faisceau laser, un logement allongé (200) étant prévu sur ledit côté arrière pour coopérer avec au moins une rainure longitudinale (23) formant glissière du premier module support (1).

7. Système selon une des revendications 1 à 6, comprenant un ensemble de commande à distance dudit élément de motorisation (25) permettant de contrôler l'appareil (3) de détermination de niveau.

8. Système selon une des revendications 1 à 7, dans lequel les moyens d'alimentation électrique auxquels est relié l'élément de motorisation (25) sont disposés dans lesdits moyens de maintien (22) et comprennent une interface de contact avec des organes d'alimentation électrique de l'appareil (3) de détermination de niveau.

9. Système selon la revendication 8, dans lequel lesdits moyens d'alimentation électrique sont prévus pour rendre l'élément de motorisation (25) du second module support (2) contrôlable à distance, par l'intermédiaire de moyens de commande électrique de l'appareil (3) de détermination de niveau contrôlés par une télécommande (4).

10. Système selon une des revendications 1 à 9, dans lequel lesdits moyens de maintien (22) comprennent des bras latéraux portant chacun un axe (A2) de pivotement sur lequel est monté l'appareil (3) de détermination de niveau du type à faisceau laser, ledit axe de pivotement (A2) étant parallèle à l'axe d'entraînement (20) entraîné par l'élément de motorisation (25) du second module support (2).

11. Système selon la revendication 10, dans lequel le second module support (2) comporte sur son côté avant une surface formant butée (26) prévue pour recevoir l'appareil (3) de détermination de niveau lorsqu'un axe imaginaire central (O) de l'appareil (3) traversant la tête (32) du laser est parallèle à l'axe longitudinal (A1), lesdits axes de pivotement (A2) étant agencés pour permettre un pivotement de l'appareil (3) au moins entre la position d'appui sur la butée (26) et une position orthogonale pour laquelle l'axe central (O) de l'appareil (3) est orthogonal audit axe (A1) longitudinal.

12. Système selon la revendication 10 ou 11, dans lequel lesdits moyens de maintien (22) comportent des moyens (23) de réglage manuel de l'inclinaison de l'appareil (3) de détermination de niveau.

13. Système selon une des revendications 1 à 12, dans lequel le second module support (2) comporte un bouton manuel (24) de manoeuvre aligné par rapport à l'élément de motorisation (25).

14. Système selon une des revendications 1 à 13, **caractérisé en ce que** le second module support (2) constitue une partie indissociable de l'appareil (3) de détermination de niveau.

15. Système selon une des revendications 1 à 13, **caractérisé en ce que** lesdits moyens de maintien (22) du second module support (2) comprennent des bras latéraux symétriques de fixation de l'appareil (3) de détermination de niveau du type dotés de moyens de fixation permettant de séparer manuellement l'appareil (3) dudit second module support (2).

16. Système selon une des revendications 1 à 15, dans lequel ladite surface de contact longitudinale de longueur déterminée (L) est du type à crans ou crénelée pour recevoir un organe de déplacement de type roue dentée.

17. Système selon une des revendications 1 à 15, **caractérisée en ce** ladite surface de contact longitudinale est remplacée par des surfaces d'au moins deux poulies ou enrouleurs/dérouleurs pour permettre la translation d'un organe de déplacement de type câble.
